# EUROPEAN PATENT APPLICATION

(11) **EP 4 738 467 A1**
(43) Date of publication of application: **06.05.2026**
(21) Application number: 24831758.8
(22) Date of filing: 17.06.2024
(51) Int. Cl.: H01M 4/38, H01M 4/36, H01M 4/587

(54) **NEGATIVE ELECTRODE ACTIVE MATERIAL AND SECONDARY BATTERY**

(30) Priority: 28.06.2023 JP 2023106514
(71) Applicant: Panasonic Intellectual Property Management Co., Ltd., Kadoma-shi, Osaka 571-0057 (JP)
(72) Inventor: SAITO, Yusuke, Kadoma-shi, Osaka 571-0057 (JP); SUZUKI, Hirotetsu, Kadoma-shi, Osaka 571-0057 (JP)
(74) Representative: Novagraaf International SA
(86) International application number: PCT/JP2024/021941
(87) International publication number: WO 2025/004896

(57) **Abstract**

A negative electrode active material 10 according to the present disclosure includes: a carbon phase 1; and Si-Ni-containing particles 2 dispersed in the carbon phase 1. A percentage of Ni in the Si-Ni-containing particles 2 may be 0.01 mass% or more and 5.0 mass% or less. A secondary battery according to the present disclosure includes: a negative electrode including the negative electrode active material according to the present disclosure; a positive electrode; and a nonaqueous electrolyte.

## Description

### TECHNICAL FIELD

The present disclosure relates to a negative electrode active material and a secondary battery.

### BACKGROUND ART

The use of composite materials containing silicon as negative electrode materials for increasing the capacity of lithium-ion batteries has recently been expected. For example, a negative electrode active material in which silicon is dispersed in a Li₂Si₂O₅ matrix has been studied. In response to a demand for further increases in capacity, efficiency, and durability of lithium-ion batteries, composite materials containing silicon and a carbon material have been studied. Patent Literature 1 discloses a silicon/graphite/carbon composite containing graphite and nonaggregated, nanoscale silicon particles, wherein the silicon particles are embedded in a carbon matrix.

### CITATION LIST

### Patent Literature

Patent Literature 1: JP 2017-506413 A

### SUMMARY OF INVENTION

### Technical Problem

In conventional techniques, enhancement in the initial charge and discharge efficiency of a battery using a composite material containing silicon and a carbon material as an active material has been desired.

### Solution to Problem

The negative electrode active material of the present disclosure includes:
a carbon phase; and
Si-Ni-containing particles dispersed in the carbon phase.

### Advantageous Effects of Invention

The technique of the present disclosure can provide a negative electrode active material that can enhance the initial charge and discharge efficiency of a battery.

### BRIEF DESCRIPTION OF DRAWINGS

FIG. 1 is a cross-sectional view schematically showing the configuration of an example of a negative electrode active material according to Embodiment 1.
FIG. 2 is a cross-sectional view schematically showing the configuration of another example of the negative electrode active material according to Embodiment 1.
FIG. 3 is a cross-sectional view schematically showing the configuration of a secondary battery according to Embodiment 2.
FIG. 4 is a graph showing X-ray diffraction patterns of negative electrode active materials of Example 1 and Comparative Example 1.

### DESCRIPTION OF EMBODIMENTS

Embodiments of the present disclosure are described in detail below with reference to the drawings. The present disclosure is not limited to the following embodiments.

### (Embodiment 1)

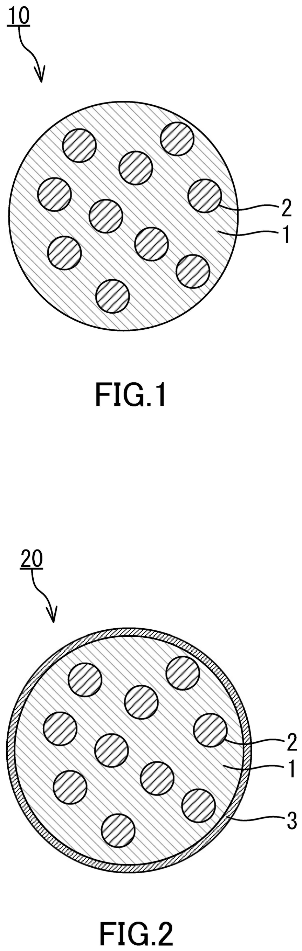

FIG. 1 is a cross-sectional view schematically showing the configuration of an example of a negative electrode active material according to Embodiment 1. The negative electrode active material 10 includes a carbon phase 1 and Si-Ni-containing particles 2 dispersed in the carbon phase 1.

A negative electrode active material 10 is a composite particle that includes the carbon phase 1 and the Si-Ni-containing particles 2.

The Si-Ni-containing particles 2 are particles that contain the element Si and the element Ni. Because the Si-Ni-containing particles 2 contain Ni, the Si-Ni-containing particles 2 exhibit enhanced electronic conductivity compared with that of silicon particles. That is, in the negative electrode active material 10, particles having enhanced electronic conductivity are dispersed in the carbon phase 1. According to the above configuration, the initial charge and discharge efficiency of a battery using the negative electrode active material 10 can be enhanced.

The carbon phase 1 is a matrix that contains carbon, and includes, for example, a carbonaceous material. The carbonaceous material may be any carbon material capable of occluding lithium ions. The carbonaceous material may be amorphous. The carbon phase 1 may be composed of an amorphous carbonaceous material. Examples of the carbonaceous material include a material derived from pitch, amorphous carbon, carbon black, and a material derived from an organic polymer. Examples of the pitch include coal pitch and petroleum pitch, and the coal pitch is, for example, coal tar pitch. According to this configuration, it is possible to further stabilize, within the negative electrode active material 10, electrical connection between the Si-Ni-containing particles 2 and electrical connection between the Si-Ni-containing particles 2 and the carbonaceous material. The carbon phase 1 may include multiple types of carbonaceous materials.

The percentage of carbon (C) in the negative electrode active material 10 may be 40 mass% or more and 80 mass% or less, 40 mass% or more and 60 mass% or less, or 40 mass% or more and 50 mass% or less.

The percentage of C in the negative electrode active material 10 can be measured by a combustion-infrared absorption method using a carbon/sulfur analyzer.

The Si-Ni-containing particles 2 are particles that contain Si and Ni.

The Si-Ni-containing particles 2 may contain crystalline silicon. That is, the element Si in the Si-Ni-containing particles 2 may be crystalline silicon.

In the Si-Ni-containing particles 2, Ni may be located within the Si-Ni-containing particles 2, and may be located on the surfaces of the Si-Ni-containing particles 2. For example, Ni may be dispersed within silicon particles, and Ni may be located on the surfaces of silicon particles.

The Si-Ni-containing particles 2 may contain crystalline silicon in which Ni atoms are dissolved to form a solid solution. That is, in the Si-Ni-containing particles 2, Ni may be Ni atoms dissolved in crystalline silicon to form a solid solution.

The Si-Ni-containing particles 2 may contain a nickel material. In the present specification, a nickel material means a material containing Ni, including metallic Ni and a Ni-containing compound. In the present specification, metallic Ni means a simple substance of nickel. The element Ni in the Si-Ni-containing particles 2 may be Ni contained in the nickel material. The Si-Ni-containing particles 2 may be composite particles of silicon and the nickel material.

The nickel material may include at least one selected from the group consisting of metallic Ni, a Ni oxide, and a Ni carbide. That is, the Si-Ni-containing particles 2 may include at least one selected from the group consisting of metallic Ni, a Ni oxide, and a Ni carbide. The Si-Ni-containing particles 2 may contain metallic Ni.

The nickel material may be dispersed within silicon particles, and may be located on the surfaces of silicon particles.

The Si-Ni-containing particles 2 may contain the nickel material and Ni atoms dissolved in crystalline silicon to form a solid solution.

The average particle diameter of the Si-Ni-containing particles 2 may be 1 nm or more and 1,000 nm or less, 1 nm or more and 100 nm or less, or 25 nm or more and 65 nm or less. According to the above configuration, the initial charge and discharge efficiency of the battery can be enhanced.

The average particle diameter of the Si-Ni-containing particles 2 can be determined from an SEM image of the negative electrode active material 10 obtained using a scanning electron microscope (SEM). That is, the average particle diameter of the Si-Ni-containing particles 2 can be measured from a cross-sectional SEM image of the negative electrode active material 10 in which the cross sections of the Si-Ni-containing particles 2 are exposed. The average particle diameter can be determined by measuring the particle diameters of 500 Si-Ni-containing particles 2 randomly extracted from the SEM image of the negative electrode active material 10 and calculating the median diameter (D50) thereof. Here, the maximum Feret diameter of the Si-Ni-containing particle 2 in the obtained SEM image can be regarded as the particle diameter of the Si-Ni-containing particle 2. The "maximum Feret diameter" is the maximum length of a perpendicular line obtained between two parallel lines sandwiching the particle.

The median of the number-based distribution of the particle diameters of 500 Si-Ni-containing particles 2 measured by SEM observation is regarded as the median diameter of the Si-Ni-containing particles 2.

The percentage of Si in the negative electrode active material 10 may be 20 mass% or more and 60 mass% or less, 30 mass% or more and 60 mass% or less, 40 mass% or more and 60 mass% or less, or 50 mass% or more and 60 mass% or less.

The percentage of Si in the negative electrode active material 10 can be measured by inductively coupled plasma atomic emission spectrometry (ICP-AES).

The percentage of Ni in the Si-Ni-containing particles 2 may be 0.01 mass% or more and 5.0 mass% or less, 0.01 mass% or more and 3.0 mass% or less, or 0.01 mass% or more and 1.0 mass% or less. The percentage of Ni in the Si-Ni-containing particles 2 may be 0.05 mass% or more, 0.1 mass% or more, or 1 mass% or more.

The mass percentage of Ni in the Si-Ni-containing particles 2 can be measured, for example, by extracting the Si-Ni-containing particles 2 from the negative electrode active material 10 and then quantifying the amount of Si and the amount of Ni by ICP.

The ratio of the sum of the masses of Si and Ni to the mass of the negative electrode active material 10 may be 20 mass% or more and 60 mass% or less, 30 mass% or more and 60 mass% or less, or 40 mass% or more and 60 mass% or less.

The mass percentage of Si in the vicinity of the surface of the negative electrode active material 10 may be lower than in the portion of the negative electrode active material 10 other than the vicinity of the surface. Here, the vicinity of the surface means the region to a depth of 5 nm from the surface of the negative electrode active material 10. The amount of Si in the depth direction can be measured by X-ray photoelectron spectroscopy (XPS).

The amount of Ni in the vicinity of the surface of the negative electrode active material 10 may be lower than in the portion of the negative electrode active material 10 other than the vicinity of the surface. The amount of Ni in the depth direction can be measured by X-ray photoelectron spectroscopy (XPS).

The Si-Ni-containing particles 2 may contain a crystalline phase. For example, as described above, the Si-Ni-containing particles 2 may contain crystalline silicon. In the present specification, "The Si-Ni-containing particles 2 contain crystalline silicon." means that, in an X-ray diffraction pattern obtained by X-ray diffraction measurement of the negative electrode active material 10 using Cu-Kα radiation, a peak derived from the Si(111) plane is observed. The X-ray diffraction peak derived from the Si(111) plane is, for example, an X-ray diffraction peak having the highest intensity within a diffraction angle 2θ range from 28.0° to 28.7°.

The X-ray diffraction pattern of the negative electrode active material 10 can be obtained by θ-2θ X-ray diffraction measurement using Cu-Kα radiation having wavelengths of 1.5405 Å and 1.5444 Å, that is, wavelengths of 0.15405 nm and 0.15444 nm.

In the present specification, a peak refers to a projecting portion having an SN ratio (i.e., the ratio of a signal S to background noise N) of 1.3 or more and a full width at half maximum of 10° or less.

In the X-ray diffraction pattern obtained by X-ray diffraction measurement of the negative electrode active material 10 using Cu-Kα radiation, an X-ray diffraction peak derived from the Si(111) plane may be present within a diffraction angle 2θ range from 28.30° to 28.40°. "An X-ray diffraction peak derived from the Si(111) plane may be present within a diffraction angle 2θ range from 28.30° to 28.40°." means that the peak top of the X-ray diffraction peak derived from the Si(111) plane is observed within the diffraction angle 2θ range from 28.30° to 28.40°. In the X-ray diffraction pattern obtained by X-ray diffraction measurement of the negative electrode active material 10 using Cu-Kα radiation, an X-ray diffraction peak derived from the Si(111) plane may be present within a diffraction angle 2θ range from 28.30° to 28.35°.

The diffraction angle of a peak in an X-ray diffraction pattern is defined as an angle at which the maximum intensity is observed in a projecting portion having an SN ratio of 1.3 or more and a full width at half maximum of 10° or less. The full width at half maximum refers to the width represented by the difference between two diffraction angles at which the intensity of an X-ray diffraction peak is half of a maximum intensity I_{MAX} of the X-ray diffraction peak.

The Si-Ni-containing particles 2 may contain an amorphous phase. The amorphous phase may contain Ni.

When a lattice image observation is performed on the Si-Ni-containing particles 2 in the negative electrode active material 10 using a transmission electron microscope (TEM), a crystalline portion and an amorphous portion may be observed, and the amorphous portion may be derived from Ni.

The average particle diameter of the negative electrode active material 10 may be 1 µm or more and 20 µm or less or 1 µm or more and 10 µm or less. The average particle diameter of the negative electrode active material 10 can be measured, for example, in the same manner as the average particle diameter of the Si-Ni-containing particles 2.

FIG. 2 is a cross-sectional view schematically showing the configuration of another example of the negative electrode active material according to Embodiment 1. A negative electrode active material 20 further includes a coating layer 3 coating the surface of the carbon phase 1, and the coating layer 3 contains carbon.

The coating layer 3 is composed of, for example, a carbonaceous material. Examples of the carbonaceous material include those described above for the carbon phase 1. The carbonaceous material contained in the coating layer 3 may be the same material as the carbonaceous material contained in the carbon phase 1. The coating layer 3 may be composed of a carbonaceous material formed from a material derived from pitch.

The thickness of the coating layer 3 may be 0.1 nm or more and 10 nm or less, and may be 5 nm or less.

The negative electrode active material 10 may further contain an additional component other than the above-described components. The negative electrode active material 10 may contain the additional component in a percentage of more than 0 mass% and 20 mass% or less, more than 0 mass% and 10 mass% or less, more than 0 mass% and 5 mass% or less, or more than 0 mass% and 2 mass% or less. The additional component may be, for example, a component derived from an organic polymer described below.

### (Method for Manufacturing Negative Electrode Active Material)

An example of a method for manufacturing the negative electrode active material according to Embodiment 1 is described. An example of the method for manufacturing the negative electrode active material according to Embodiment 1 includes: obtaining Si-Ni-containing particles containing Si and Ni; mixing the Si-Ni-containing particles and a carbon source; and firing the resulting mixture.

The method may include, between the obtaining the Si-Ni-containing particles and the mixing the Si-Ni-containing particles and the carbon source, granulating the Si-Ni-containing particles. That is, the method for manufacturing the negative electrode active material according to Embodiment 1 may include: obtaining Si-Ni-containing particles; granulating the Si-Ni-containing particles; mixing the Si-Ni-containing particles and a carbon source; and firing the resulting mixture.

The method for obtaining the Si-Ni-containing particles is not particularly limited. The Si-Ni-containing particles are obtained, for example, by mixing a solution containing a Ni source and silicon particles and heat-treating the mixture.

The Ni source is, for example, nickel formate, nickel nitrate, or nickel acetate. The Ni source may be nickel formate.

The mixing time is, for example, 10 minutes or more and 5 hours or less, and may be 3 hours or less.

The temperature of the heat treatment is, for example, 200°C or more and 600°C or less, and may be 500°C or less.

The heat treatment may be performed in an inert atmosphere.

The granulation of the Si-Ni-containing particles is performed, for example, by dispersing the Si-Ni-containing particles in an aqueous solution containing a water-soluble organic polymer and then spray-drying the dispersion.

The water-soluble organic polymer is, for example, carboxymethylcellulose, hydroxymethylcellulose, hydroxyethylcellulose, hydroxypropylcellulose, methylcellulose, ethylcellulose, polyvinyl alcohol, starch, sodium polyacrylate, polyvinylpyrrolidone, casein, or gelatin, and may be carboxymethylcellulose.

The means for mixing the Si-Ni-containing particles and the carbon source is not particularly limited, and the mixing may be performed, for example, using a rocking mill.

As the carbon source, for example, pitch, tar, a thermoplastic resin, or a thermosetting resin can be used. The carbon source may be pitch. Examples of the pitch include coal pitch and petroleum pitch, and the coal pitch is, for example, coal tar pitch.

By performing the firing, the carbon source and the water-soluble organic polymer used for the granulation can be carbonized. The carbon source and the water-soluble organic polymer can be carbonized to form amorphous carbon. Through the above process, a negative electrode active material that is a composite particle of Si-Ni-containing particles and carbon is obtained.

The firing temperature is, for example, 700°C or more and 1,000°C or less, and may be 750°C or more and 850°C or less. The firing time is, for example, 1 hour or more and 10 hours or less, and may be 5 hours or less. The firing may be performed in an inert atmosphere.

Thus, the negative electrode active material according to Embodiment 1 is obtained.

### (Embodiment 2)

A secondary battery according to Embodiment 2 includes a negative electrode, a positive electrode, and an electrolyte. The negative electrode includes a negative electrode material that includes the negative electrode active material according to Embodiment 1. That is, in the secondary battery according to Embodiment 2, the negative electrode includes the negative electrode active material according to Embodiment 1.

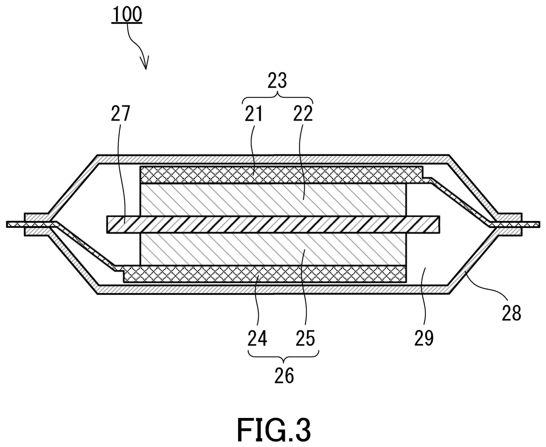

FIG. 3 is a cross-sectional view schematically showing the configuration of the secondary battery according to Embodiment 2. A secondary battery 100 includes a positive electrode 23, a negative electrode 26, a separator 27, a nonaqueous electrolyte 29, and an outer casing 28. The positive electrode 23, the negative electrode 26, the nonaqueous electrolyte 29, and the separator 27 are housed in the outer casing 28. The separator 27 is disposed between the positive electrode 23 and the negative electrode 26. The positive electrode 23 and the negative electrode 26 face each other with the separator 27 interposed therebetween. The positive electrode 23 includes a positive electrode mixture layer 22 and a positive electrode current collector 21. The positive electrode mixture layer 22 is disposed between the positive electrode current collector 21 and the separator 27. The negative electrode 26 includes a negative electrode mixture layer 25 and a negative electrode current collector 24. The negative electrode mixture layer 25 is disposed between the negative electrode current collector 24 and the separator 27.

The positive electrode mixture layer 22 includes a positive electrode active material capable of occluding and releasing lithium ions. Examples of the positive electrode active material include a lithium-containing transition metal oxide, a lithium-containing transition metal phosphate, a transition metal fluoride, a polyanion material, a fluorinated polyanion material, a transition metal sulfide, a transition metal oxysulfide, and a transition metal oxynitride. In particular, when a lithium-containing transition metal oxide or a lithium-containing transition metal phosphate is used as the positive electrode active material, the battery can be manufactured at a reduced cost and exhibit an increased average discharge voltage. Examples of lithium-containing transition metal oxides include lithium cobalt oxides, lithium nickel cobalt aluminum oxides, lithium nickel cobalt manganese oxides, and lithium nickel manganese oxides. Examples of lithium-containing transition metal phosphates include lithium iron phosphates, lithium vanadium phosphates, lithium cobalt phosphates, and lithium nickel phosphates. At least one selected from these positive electrode active materials can be used.

The positive electrode mixture layer 22 may include a conductive additive, an ion conductor, and a binder as necessary.

The conductive additive and the ion conductor are used to reduce the resistance of the electrode. Examples of the conductive additive include a carbon material and a conductive polymer compound. Examples of carbon materials include carbon black, graphite, acetylene black, carbon nanotubes, carbon nanofibers, graphene, fullerenes, and graphite oxide. Examples of conductive polymer compounds include polyaniline, polypyrrole, and polythiophene. At least one selected from these conductive additives can be used.

Examples of the ion conductor include gel electrolytes such as polymethyl methacrylate and polymethacrylic acid methyl ester, organic solid electrolytes such as polyethylene oxide, and inorganic solid electrolytes such as Li₇La₃Zr₂O₁₂. At least one selected from these ion conductors can be used.

The binder is used to enhance the binding properties of the materials constituting the electrode. Examples of the binder include polymer materials such as polyvinylidene fluoride, a vinylidene fluoride-hexafluoropropylene copolymer, a vinylidene fluoride-tetrafluoroethylene copolymer, polytetrafluoroethylene, carboxymethylcellulose, polyacrylic acid, styrene-butadiene copolymer rubber, polypropylene, polyethylene, and polyimide. At least one selected from these binders can be used.

The positive electrode current collector 21 is, for example, a sheet or film formed of a metal material such as aluminum, an aluminum alloy, stainless steel, titanium, or a titanium alloy. The sheet or film may be porous or non-porous. The sheet or film is metal foil, metal mesh, or the like. A carbon material as a conductive auxiliary material may be applied to the surface of the positive electrode current collector 21.

The negative electrode mixture layer 25 includes a negative electrode material. The negative electrode material includes the negative electrode active material according to Embodiment 1. The negative electrode material (the negative electrode mixture layer 25) may include a conductive additive, an ion conductor, and a binder as necessary. The materials that can be used as the conductive additive, the ion conductor, and the binder in the positive electrode mixture layer 22 can also be used in the negative electrode mixture layer 25.

The negative electrode current collector 24 is, for example, a sheet or film formed of a metal material such as stainless steel, nickel, a nickel alloy, copper, or a copper alloy. The sheet or film may be porous or non-porous. The sheet or film is metal foil, metal mesh, or the like. A carbon material as a conductive auxiliary material may be applied to the surface of the negative electrode current collector 24.

The separator 27 is an electrolyte layer having lithium-ion conductivity. The material of the separator 27 may be any material through which lithium ions are allowed to pass. The material of the separator 27 can be at least one selected from the group consisting of a solid electrolyte, a gel electrolyte, an ion exchange resin membrane, a semipermeable membrane, and a porous membrane. When the separator 27 is formed of any of these materials, the safety of the secondary battery 100 can be sufficiently ensured. Examples of the solid electrolyte include sulfide solid electrolytes, such as Li₂S-P₂S₅, and oxide solid electrolytes, such as Li₇La₃Zr₂O₁₂ (LLZ). Examples of the gel electrolyte include gel electrolytes containing a fluororesin, such as PVdF. Examples of the ion exchange resin membrane include cation exchange membranes and anion exchange membranes. Examples of the porous membrane include porous membranes made of a polyolefin resin and porous membranes formed of glass paper obtained by weaving glass fibers into a nonwoven fabric.

The positive electrode 23, the negative electrode 26, and the separator 27 may be impregnated with the nonaqueous electrolyte 29. The nonaqueous electrolyte 29 may fill the interior space of the outer casing 28. The action of the nonaqueous electrolyte 29 allows lithium ions to migrate between the positive electrode 23 and the negative electrode 26. The nonaqueous electrolyte 29 may include a nonaqueous electrolyte solution, a gel electrolyte, or an ionic liquid.

The nonaqueous electrolyte solution includes, for example, a nonaqueous solvent and a lithium salt.

The nonaqueous solvent can be a cyclic carbonate, a chain carbonate, a cyclic ether, a chain ether, a cyclic ester, a chain ester, a fluorinated solvent, a nitrile, or the like. Examples of cyclic carbonates include ethylene carbonate, propylene carbonate, and butylene carbonate. Examples of chain carbonates include dimethyl carbonate, ethyl methyl carbonate, and diethyl carbonate. Examples of cyclic ethers include tetrahydrofuran, 1,4-dioxane, and 1,3-dioxolane. Examples of chain ethers include 1,2-dimethoxyethane and 1,2-diethoxyethane. Examples of cyclic esters include γ-butyrolactone. Examples of chain esters include methyl acetate. Examples of fluorinated solvents include fluoroethylene carbonate, methyl fluoropropionate, fluorobenzene, fluoroethylmethyl carbonate, and fluorodimethylene carbonate. Examples of nitriles include acetonitrile. At least one selected from these nonaqueous solvents can be used.

Examples of the lithium salt include lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bis(perfluoroethylsulfonyl)imide (LiN(SO₂C₂F₅)₂), LiAsF₆, LiCF₃SO₃, and lithium difluoro(oxalato)borate. At least one selected from these lithium salts can be used.

The gel electrolyte can be a material obtained by impregnating a polymer material with a nonaqueous electrolyte solution. Examples of the polymer material include polyethylene oxide, polyacrylonitrile, polyvinylidene fluoride, polymethyl methacrylate, and a polymer having an ethylene oxide bond.

Examples of a cation constituting the ionic liquid include an aliphatic chain quaternary cation, an aliphatic cyclic ammonium, and a nitrogen-containing heterocyclic aromatic cation. Examples of aliphatic chain quaternary cations include tetraalkylammonium and tetraalkylphosphonium. Examples of aliphatic cyclic ammoniums include pyrrolidinium, morpholinium, imidazolinium, tetrahydropyrimidinium, piperazinium, and piperidinium. Examples of nitrogen-containing heterocyclic aromatic cations include pyridinium and imidazolium. Examples of an anion constituting the ionic liquid include PF₆⁻, BF₄⁻, SbF₆⁻, AsF₆⁻, SO₃CF₃⁻, N(SO₂F)₂⁻, N(SO₂CF₃)₂⁻, N(SO₂C₂F₅)₂⁻, N(SO₂CF₃)(SO₂C₄F₉)⁻, and C(SO₂CF₃)₃⁻. The ionic liquid may contain a lithium salt.

The outer casing 28 is formed of, for example, a material obtained by laminating a metal foil such as an aluminum foil with a resin film such as a PET film. The outer casing 28 may be a container made of resin or metal.

The form of the secondary battery 100 is not limited to a stacked type. Other forms of the secondary battery 100 include a coin type, a cylindrical type, a prismatic type, a sheet type, a button type, and a flat type.

The secondary battery according to Embodiment 2 exhibits enhanced initial charge and discharge efficiency owing to the inclusion of the negative electrode active material according to Embodiment 1 in the negative electrode.

### (Other Embodiments)

### (Supplementary Description)

The above description of the embodiments discloses the following techniques.

### (Technique 1)

A negative electrode active material including:
a carbon phase; and
Si-Ni-containing particles dispersed in the carbon phase.

According to this configuration, the initial charge and discharge efficiency of the battery can be enhanced.

### (Technique 2)

The negative electrode active material according to Technique 1, wherein a percentage of Ni in the Si-Ni-containing particles is 0.01 mass% or more and 5.0 mass% or less. According to this configuration, the initial charge and discharge efficiency of the battery can be enhanced.

### (Technique 3)

The negative electrode active material according to Technique 1 or 2, wherein the Si-Ni-containing particles include at least one selected from the group consisting of metallic Ni, a Ni oxide, and a Ni carbide. According to this configuration, the initial charge and discharge efficiency of the battery can be enhanced.

### (Technique 4)

The negative electrode active material according to any one of Techniques 1 to 3, wherein the Si-Ni-containing particles include metallic Ni. According to this configuration, the initial charge and discharge efficiency of the battery can be enhanced.

### (Technique 5)

The negative electrode active material according to any one of Techniques 1 to 4, wherein the Si-Ni-containing particles include crystalline silicon in which Ni atoms are dissolved to form a solid solution. According to this configuration, the initial charge and discharge efficiency of the battery can be enhanced.

### (Technique 6)

The negative electrode active material according to any one of Techniques 1 to 5, wherein the Si-Ni-containing particles include an amorphous phase. According to this configuration, the initial charge and discharge efficiency of the battery can be enhanced.

### (Technique 7)

The negative electrode active material according to any one of Techniques 1 to 6, wherein in an X-ray diffraction pattern obtained by X-ray diffraction measurement using Cu-Kα radiation, an X-ray diffraction peak derived from a Si(111) plane is present within a diffraction angle 2θ range from 28.30° to 28.40°. According to this configuration, the initial charge and discharge efficiency of the battery can be enhanced.

### (Technique 8)

The negative electrode active material according to any one of Techniques 1 to 7, wherein an average particle diameter of the Si-Ni-containing particles is 1 nm or more and 1,000 nm or less. According to this configuration, the initial charge and discharge efficiency of the battery can be enhanced.

### (Technique 9)

The negative electrode active material according to any one of Techniques 1 to 8, further including a coating layer coating a surface of the carbon phase, wherein the coating layer includes carbon. According to this configuration, the initial charge and discharge efficiency of the battery can be further enhanced.

### (Technique 10)

A secondary battery including:
a negative electrode including the negative electrode active material according to any one of Techniques 1 to 9;
a positive electrode; and
an electrolyte.

According to this configuration, the effect of enhancing the initial charge and discharge efficiency can be obtained.

### Examples

The present disclosure is described in more detail below with reference to an example. The following example is merely illustrative of one embodiment and is not intended to limit the present disclosure.

### [Preparation of Negative Electrode Active Material]

### (Example 1)

An amount of 0.2 g of nickel formate as the Ni source was dissolved in 20 mL of ethanol to obtain a Ni source solution. The Ni source solution obtained and 6 g of silicon particles having an average particle diameter of 20 nm were mixed for 30 minutes. After the mixing, the mixture was heat-treated in an argon atmosphere at 400°C for 1 hour. Thus, the Ni source was incorporated into the silicon particles, whereby Si-Ni-containing particles were prepared.

The percentage of Ni in the Si-Ni-containing particles obtained was measured by ICP-AES. Specifically, the sample was weighed into a nickel crucible, sodium peroxide was then added, and the mixture was heated in an electric furnace to perform alkali fusion. The resulting fused product was dissolved in acid and diluted with pure water, and the diluted solution was evaluated by ICP analysis. The measurement result is shown in Table 1.

The Si-Ni-containing particles obtained were dispersed in a carboxymethylcellulose (CMC) aqueous solution. At this time, the mass ratio of the Si-Ni-containing particles to the CMC was 10:1. Subsequently, granulation was performed using a spray dryer to obtain a granulated powder.

The granulated powder obtained and coal tar pitch were introduced into a rocking mill and mixed at 50 Hz for 1 minute. The resulting mixture was heat-treated in an argon atmosphere at 800°C for 5 hours.

Thus, the negative electrode active material of Example 1 was obtained.

Here, in a preliminary experiment, it was confirmed by X-ray diffraction measurement that heat-treating nickel formate at 800°C produces metallic Ni. Accordingly, it is presumed that the above heat treatment at 800°C produced metallic Ni from the nickel formate, which served as the Ni source, in the Si-Ni-containing particles.

### (Comparative Example 1)

The negative electrode active material of Comparative Example 1 was obtained in the same manner as in Example 1, except that silicon particles having an average particle diameter of 20 nm were dispersed in a CMC aqueous solution in a mass ratio of the silicon particles to the CMC of 10:1 to obtain a granulated powder. That is, in Comparative Example 1, Ni was not incorporated into the silicon particles; silicon particles were used instead of Si-Ni-containing particles.

### [X-ray Diffraction]

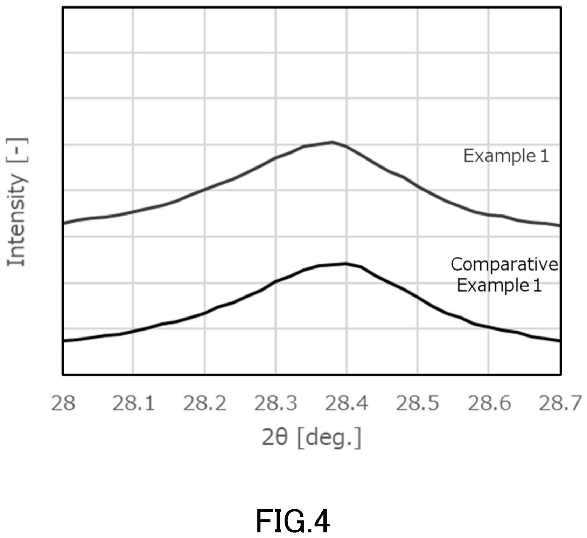

X-ray diffraction patterns of the negative electrode active materials of Example 1 and Comparative Example 1 were obtained by powder X-ray diffraction measurement. An X-ray diffractometer (MiniFlex 600, manufactured by Rigaku Corporation) was used for the measurement. Cu-Kα radiation (wavelengths of 1.5405 Å and 1.5444 Å) was used as the X-ray source. FIG. 4 is a graph showing the X-ray diffraction patterns of the negative electrode active materials of Example 1 and Comparative Example 1. The diffraction angles at which the peak tops of peaks derived from the Si(111) plane were observed for Example 1 and Comparative Example 1 are shown in Table 1. In the X-ray diffraction pattern of the negative electrode active material of Example 1, the peak derived from the Si(111) plane was observed at a diffraction angle 2θ of 28.34°. In contrast, in the X-ray diffraction pattern of the negative electrode active material of Comparative Example 1, the peak derived from the Si(111) plane was observed at a diffraction angle 2θ of 28.41°. Here, it is generally known that when atoms having larger atomic radii than atoms constituting a crystal lattice are introduced into the crystal lattice, the peak is shifted toward lower angles. Accordingly, from the above results, it can be confirmed that Ni is incorporated into the silicon crystal lattice in the negative electrode active material of Example 1.

### [Lattice Image Observation]

A lattice image observation was performed on the negative electrode active material of Example 1 by cross-sectional transmission electron microscopy (cross-sectional TEM). As a result, in the Si-Ni-containing particles and the surrounding region under observation, crystalline portions derived from Si were observed. Furthermore, in the Si-Ni-containing particles, amorphous portions were observed in portions inferred to be derived from Ni.

### [Fabrication of Battery]

The evaluation cells of Example 1 and Comparative Example 1 were fabricated using the negative electrode active materials of Example 1 and Comparative Example 1, as follows.

### (Preparation of Negative Electrode)

The negative electrode active material and graphite were mixed in a mass ratio of 20:80 to obtain a mixture. This mixture, sodium carboxymethylcellulose (CMCNa), styrene-butadiene rubber (SBR), and lithium polyacrylate salt were mixed in a mass ratio of the mixture of negative electrode active material and graphite:CMCNa:SBR:lithium polyacrylate = 96.5:1:1.5:1 to obtain a negative electrode mixture. Water was added to the negative electrode mixture, followed by stirring with a mixer to prepare a negative electrode slurry. Next, the negative electrode slurry was applied onto the surface of a copper foil so that the mass of the negative electrode mixture was 190 g per 1 m². The coating film was dried and then rolled to prepare a negative electrode in which a negative electrode mixture layer having a density of 1.5 g/cm³ was formed on both sides of the copper foil.

The negative electrode was cut into a piece measuring 20 mm × 20 mm having a protruding portion measuring 5 mm × 5 mm. The negative electrode mixture layer on the protruding portion was peeled off to expose the copper foil. Subsequently, a negative electrode tab lead was connected to the exposed portion of the copper foil, and a predetermined region of the outer periphery of the negative electrode tab lead was covered with an insulating film.

### (Preparation of Counter Electrode)

A tab having a small piece of Ni mesh welded to its end portion was fabricated. The tab was cut to a predetermined size, and the mesh portion was pressed against a 300 µm-thick lithium metal foil to prepare a counter electrode.

### (Preparation of Nonaqueous Electrolyte)

LiPF₆ was dissolved in a solvent mixture of ethylene carbonate (EC), ethyl methyl carbonate (EMC), and dimethyl carbonate (DMC) mixed in a volume ratio of EC:EMC:DMC = 4:1:15 to prepare a nonaqueous electrolyte. The LiPF₆ concentration was set to 1.3 mol/L.

### (Fabrication of Cell)

An evaluation cell of the negative-electrode-limited type was fabricated using the above negative electrode and two counter electrodes, as follows. The cell fabrication was performed in a dry air atmosphere with a dew point of -60°C or less. The negative electrode was sandwiched between the pair of counter electrodes so that the negative electrode mixture layer and each lithium metal foil faced each other with a separator interposed therebetween, whereby an electrode group was prepared. Next, an Al laminate film cut to a rectangular shape was folded in half, and the two ends along the long sides were heat-sealed to form a tubular shape. Subsequently, the electrode group prepared was inserted into the tube through one of the short sides of the Al laminate film. The end face of the Al laminate film was aligned with the insulating film of each tab lead, followed by heat-sealing. Next, 0.3 cm³ of an electrolyte solution was injected through the unsealed short side of the tube. After the injection, the electrode group was left to stand for 3 minutes under a reduced pressure of 0.02 MPa and then returned to atmospheric pressure. This operation was performed twice to impregnate the negative electrode mixture layer with the nonaqueous electrolyte. Finally, the end face of the tubular Al laminate film through which the electrolyte solution was injected was heat-sealed under reduced pressure. Thus, the evaluation cell was obtained.

### [Evaluation of Charge and Discharge Efficiency]

For the evaluation cells of Example 1 and Comparative Example 1, at an ambient temperature of 25°C, a constant-current charge was performed at a current value of 0.1C until the voltage reached 1.0 V. Subsequently, a constant-current discharge was performed at a current value of 0.1C until the voltage reached 0.005 V. Thus, the initial charge and discharge efficiency of the evaluation cells of Example 1 and Comparative Example 1 was evaluated. The relative values of charge and discharge efficiency are shown in Table 1, with the value of Comparative Example 1 set as 100%.

**[Table 1]**

| | Ni source | Percentage of Ni in Si-Ni-containing particles [mass%] | Si peak position [°] | Initial charge and discharge efficiency [%] |
|---|---|---|---|---|
| Example 1 | Nickel formate | 1 | 28.34 | 101 |
| Comparative Example 1 | - | - | 28.41 | 100 |

### (Discussion)

The battery using the negative electrode active material of Example 1 exhibited enhanced initial charge and discharge efficiency compared with that of Comparative Example 1.

### INDUSTRIAL APPLICABILITY

The technique of the present disclosure can be used in batteries such as lithium-ion secondary batteries.

## Claims

1. A negative electrode active material comprising:
a carbon phase; and
Si-Ni-containing particles dispersed in the carbon phase.

2. The negative electrode active material according to claim 1, wherein
a percentage of Ni in the Si-Ni-containing particles is 0.01 mass% or more and 5.0 mass% or less.

3. The negative electrode active material according to claim 1, wherein
the Si-Ni-containing particles comprise at least one selected from the group consisting of metallic Ni, a Ni oxide, and a Ni carbide.

4. The negative electrode active material according to claim 3, wherein
the Si-Ni-containing particles comprise metallic Ni.

5. The negative electrode active material according to claim 1, wherein
the Si-Ni-containing particles comprise crystalline silicon in which Ni atoms are dissolved to form a solid solution.

6. The negative electrode active material according to claim 1, wherein
the Si-Ni-containing particles comprise an amorphous phase.

7. The negative electrode active material according to claim 1, wherein
in an X-ray diffraction pattern obtained by X-ray diffraction measurement using Cu-Kα radiation, an X-ray diffraction peak derived from a Si(111) plane is present within a diffraction angle 2θ range from 28.30° to 28.40°.

8. The negative electrode active material according to claim 1, wherein
an average particle diameter of the Si-Ni-containing particles is 1 nm or more and 1,000 nm or less.

9. The negative electrode active material according to claim 1, further comprising a coating layer coating a surface of the carbon phase, wherein
the coating layer comprises carbon.

10. A secondary battery comprising:
a negative electrode comprising the negative electrode active material according to any one of claims 1 to 9;
a positive electrode; and
an electrolyte.
